# EUROPEAN PATENT SPECIFICATION

(11) **EP 4 111 782 B1**
(45) Date of publication and mention of the grant of the patent: **17.09.2025**
(21) Application number: 21708934.1
(22) Date of filing: 19.01.2021
(51) Int. Cl.: H04W 72/23, H04W 72/0453, H04L 5/00

(54) **BANDWIDTH PART (BWP) ENHANCEMENT**
BANDBREITEN-TEIL (BWP)-ERWEITERUNG
AMÉLIORATION DE PARTIES DE BANDE PASSANTE (BWP)

(30) Priority: 28.02.2020 US 202062983145 P
(43) Date of publication of application: 04.01.2023
(73) Proprietor: Nokia Technologies Oy, 02610 Espoo (FI)
(72) Inventor: SCHOBER, Karol, 00440 Helsinki (FI); TIIROLA, Esa Tapani, 90620 Oulu (FI); HOOLI, Kari Juhani, 90620 Oulu (FI)
(74) Representative: Script Intellectual Property LLP
(86) International application number: PCT/EP2021/050983
(87) International publication number: WO 2021/170311

(56) References cited:
- WO-A1-2019/066581
- US-A1- 2018 288 746
- US-A1- 2019 349 983

## Description

### FIELD:

Some example embodiments may generally relate to mobile or wireless telecommunication systems, such as Long Term Evolution (LTE) or fifth generation (5G) radio access technology or new radio (NR) access technology, or other communications systems. For example, certain embodiments may relate to systems and/or methods for bandwidth part (BWP) enhancement.

### BACKGROUND:

Examples of mobile or wireless telecommunication systems may include the Universal Mobile Telecommunications System (UMTS) Terrestrial Radio Access Network (UTRAN), Long Term Evolution (LTE) Evolved UTRAN (E-UTRAN), LTE-Advanced (LTE-A), MulteFire, LTE-A Pro, and/or fifth generation (5G) radio access technology or new radio (NR) access technology. 5G wireless systems refer to the next generation (NG) of radio systems and network architecture. 5G is mostly built on a new radio (NR), but a 5G (or NG) network can also build on E-UTRA radio. It is estimated that NR may provide bitrates on the order of 10-20 Gbit/s or higher, and may support at least enhanced mobile broadband (eMBB) and ultrareliable low-latency-communication (URLLC) as well as massive machine type communication (mMTC) and support for various unlicensed bands (NR-U). NR is expected to deliver extreme broadband and ultra-robust, low latency connectivity and massive networking to support the Internet of Things (IoT). With IoT and machine-to-machine (M2M) communication becoming more widespread, there will be a growing need for networks that meet the needs of lower power, low data rate, and long battery life. It is noted that, in 5G, the nodes that can provide radio access functionality to a user equipment (i.e., similar to Node B in UTRAN or eNB in LTE) may be named gNB when built on NR radio and may be named NG-eNB when built on E-UTRA radio.
US2018/288746 discloses a system where two configuration options comprising BWPs may coexist for configuring grant-free transmission resources, the base station may notify a user equipment which is selected.
WO2019/066581 discloses a system where there may be two BWPs for transmitting a sounding reference signal SRS and where they overlap prioritising of the BWPs is used to select one. US2019/349983 discloses a system for efficient management of multiple active BWPs, the base unit indicates which of multiple configured grants are to be used upon a change to the multiple active BWPs.

### BRIEF DESCRIPTION OF THE DRAWINGS:

For proper understanding of example embodiments, reference should be made to the accompanying drawings, wherein:
Fig. 1 illustrates an example of BWP enhancement, according to some embodiments;
Figs. 2a illustrates an example of collision handling between anchor and non-anchor BWP signals, according to some embodiments;
Fig. 2b illustrates an example of collision handling between anchor and non-anchor BWP signals, according to some embodiments;
Fig. 3a illustrates an example of a scheduling operation, according to some embodiments;
Fig. 3b illustrates an example of a scheduling operation, according to some embodiments;
Fig. 3c illustrates an example of a scheduling operation, according to some embodiments;
Fig. 4 illustrates an example signal diagram of a network node and UE interaction, according to some embodiments;
Fig. 5 illustrates an example flow diagram of a method, according to some embodiments;
Fig. 6 illustrates an example flow diagram of a method, according to some embodiments;
Fig. 7a illustrates an example block diagram of an apparatus, according to an embodiment; and
Fig. 7b illustrates an example block diagram of an apparatus, according to another embodiment.

### DETAILED DESCRIPTION:

The invention comprises a method as defined in appended independent claim 1, an apparatus as defined in appended independent claim 8. Embodiments of the invention representing particular realisations of it are defined in dependent claims 2-7, 9-15. In the following description, the formulation "embodiment" is only relevant to the invention if comprised in the definition of the appended claims.

It will be readily understood that the components of certain example embodiments, as generally described and illustrated in the figures herein, may be arranged and designed in a wide variety of different configurations. Thus, the following detailed description of some example embodiments of systems, methods, apparatuses, and computer program products for BWP enhancement is not intended to limit the scope of certain embodiments but is representative of selected example embodiments.

The features, structures, or characteristics of example embodiments described throughout this specification may be combined in any suitable manner in one or more example embodiments. For example, the usage of the phrases "certain embodiments," "some embodiments," or other similar language, throughout this specification refers to the fact that a particular feature, structure, or characteristic described in connection with an embodiment may be included in at least one embodiment. Thus, appearances of the phrases "in certain embodiments," "in some embodiments," "in other embodiments," or other similar language, throughout this specification do not necessarily all refer to the same group of embodiments, and the described features, structures, or characteristics may be combined in any suitable manner in one or more example embodiments. In addition, the phrase "set of" refers to a set that includes one or more of the referenced set members. As such, the phrases "set of," "one or more of," and "at least one of," or equivalent phrases, may be used interchangeably. As used herein, "or" is intended to mean "and/or," unless explicitly stated otherwise.

Additionally, if desired, the different functions or operations discussed below may be performed in a different order and/or concurrently with each other. Furthermore, if desired, one or more of the described functions or operations may be optional or may be combined. As such, the following description should be considered as merely illustrative of the principles and teachings of certain example embodiments, and not in limitation thereof.

Support for multiple numerologies is a feature in NR (as used herein, a numerology, including as used in "mixed numerology," cross-numerology," "numerology scaling," or "numerology parameter," may refer to a sub-carrier spacing and cyclic prefix combination). Larger subcarrier spacing leads to larger carrier bandwidth for a given fast Fourier transform (FFT) size, smaller symbol duration and potentially lower latency, reduced sensitivity to phase noise, and reduced cyclic prefix (CP) length (for a given CP overhead). A cyclic prefix may refer to the prefixing of a symbol, with a repetition of the end of the symbol. NR utilizes time-frequency scaling with respect to LTE (sub-carrier spacing (SCS)=15 kHz). Scaling is characterized by a scaling factor 2^{µ}. Scaling decreases time domain properties (such as slot/orthogonal frequency division multiplex (OFDM) symbol/CP length) by factor of 2^{µ}, and increases the frequency domain properties (such as subcarrier spacing and physical resource block (PRB) size in a frequency domain) by factor of 2^{µ}. NR supports wider bandwidth and phase noise mitigation. Specifically, NR supports BWP sizes from several PRBs to up to 275 PRBs. This means that the maximum BWP size according to NR is 396 megahertz (MHz) (0.12 MHz*12*275). This is not a large enough BWP size for scenarios above 52.6 gigahertz (GHz) where aggregated system bandwidth can be as high as 12 GHz (or even more). Additionally, phase noise will also be increased at a higher carrier frequency. Larger subcarrier spacing may have to be introduced to tackle phase noise, and to provide larger carrier bandwidth with reasonable FFT size. This can be achieved by extending the numerology scaling framework defined in NR to support additional values for µ. Support for wider bandwidth and phase noise mitigation may further include 2^{µ} scaling of subcarrier spacing, IFFT/FFT block length 2^{µ}, and clock rate 2^{µ} related to LTE and BWP framework.

In NR, the concept of serving cell and UE adaptive bandwidth was introduced by means of BWPs. In NR, a UE is instructed to operate on a specific part of a network node's (gNB's) bandwidth, that is called a BWP. Up to four BWPs can be configured separately for uplink (UL) and downlink (DL). Each BWP can have, for example, separately configured subcarrier spacing (SCS), cyclic prefix, bandwidth (in terms of contiguous PRBs as well as location of the bandwidth in the cell's total bandwidth), and K0, K1, and K2 values (defining the time offsets from DL assignment reception to the beginning of physical downlink shared channel (PDSCH), from the end of physical downlink shared channel (PDSCH) to hybrid automatic response request acknowledge (HARQ-ACK) transmission time, and from UL grant reception to the start of physical uplink shared channel (PUSCH) transmission, respectively). Data related parameters and control related parameters are configured separately by pdsch-Config and pdcch-Config, respectively. Location and numerology parameters are configured in genericParameters.

With respect to BWP switching in NR, the UE may, currently in NR, have only one BWP per cell active at a time (e.g., where radio resource control (RRC) parameters are active for only one BWP at a given time). Active BWPs can be indicated by a field in the downlink control information (DCI) or by RRC signalling. An active BWP may be a BWP for which RRC configurations of the BWP are active. BWP switching occurs after a UE has received the signalling changing the active BWP. The UE may also fall back to default BWP after a configured period of inactivity.

With respect to blind decoding (BD)/control channel element (CCE) limits for control monitoring, the maximum number of blind decodes and channel estimates (in the number of unique CCEs) a UE is capable of performing per slot is defined in NR as a function of SCS. With increased numerology, capability numbers decrease considerably.

It is expected that introduction of large subcarrier spacing/numerologies may have to be used in 60 GHz bands because phase noise of practical implementations may not allow for operation of higher order modulations, such as 64 quadrature amplitude modulation (QAM). For low order modulations, such as quadrature phase shift keying (QPSK), and existing subcarrier spacing, such as 120 kHz SCS, the increased phase noise does not cause noticeable performance degradation. It is also noted that selection of the subcarrier spacing may depend on the used waveform. For example, an OFDM waveform is more sensitive to phase noise compared to a single carrier waveform (such as discrete Fourier transform-spread-OFDM (DFT-s-OFDM)). It has been agreed already that the existing NR waveforms will be used for the 60 GHz scenario based on a Rel-17 study item (SI). This means that OFDM is the only possible waveform for DL. Hence, usage of larger subcarrier spacing, especially in DL, is difficult to avoid.

However, with the introduction of 960 kHz SCS (as compared to currently supported 120kHz in frequency range 2 (FR2), for example, on 30 GHz bands) at least two considerations may have to be taken into account. One consideration is coverage reduction. Coverage is reduced 8-fold (an additional 9 decibel (dB) signal energy loss occurs due to shortening of transmission). Due to regulatory limitations on max equivalently isotopically radiated power (EIRP), the coverage reduction due to the energy loss cannot be compensated for by increasing transmit power or beam forming gain. NR supports repetition for PDSCH, PUSCH and physical uplink control channel (PUCCH) providing a mechanism compensating for the coverage loss. There is no such mechanism for physical downlink control channel (PDCCH). In some scenarios, the 60 GHz band may be used for downlink as part of DL carrier aggregation (CA), or both a network node (gNB) and a UE can provide equal EIRP (e.g., in the case of relay link). In this respect, PDCCH may be the coverage limiting channel. Another consideration is PDCCH monitoring burden. With shortening slot size 8-fold, and slot-based monitoring, the rate of PDCCH monitoring and corresponding processing complexity as well as related UE power consumption increases 8 times. While UEs are currently capable of estimating 32 CCEs per 120 kHz slot (µ=3), with 960 kHz SCS (µ =6), the budget may be smaller than 10 CCE, which would not allow even one PDCCH candidate of aggregation level (AL) 16 (i.e., 16 CCEs) in a slot.

Therefore, it would be beneficial to maintain the current PDCCH monitoring rate as well as PDCCH transmission duration for cell edge UEs. One possible solution is to support PDCCH with 120 kHz (slow control) and PDSCH (and/or PUSCH) with 960kHz because control may operate such that phase noise does not impact PDCCH with QPSK modulation, while high order modulation PDSCH (and/or PUSCH) would be supported to boost peak data rates. SCS/numerology is a property of BWP, and, currently in NR, only one BWP can be active (although (120, 960) kHz is used as an example, of a mixed numerology scenario between control and data (PDCCH and PDSCH), different combinations are with the scope of certain embodiments (e.g., (120, 1920) kHz, (240, 960) kHz, or (120, 120) kHz)). A network node (gNB) may schedule PDSCH/PUSCH on other BWPs, but it may use a 3 milisecond (ms) gap (with no transmit or receive) each time such cross-BWP scheduling is performed. A mixed numerology scenario may include a scenario where a certain cell contains multiple bandwidth parts frequency division multiplexed with each other. Another example of mixed numerology may include synchronization signal block (SSB) multiplexing with other downlink signals (such as PDCCH/PDSCH) with different numerologies. One motivation behind this is that SSB may not support all numerologies supported by PDCCH/PDSCH.

NR supports multiple numerologies. Based on that, NR could use one numerology for control (e.g., PDCCH) and another numerology for data (e.g., PDSCH). However, based on existing NR design, each BWP is associated with a single numerology. Hence, mixed numerology operation within a BWP is not supported and frequent switching between BWPs is impractical, as discussed before. There are various possible solutions to the question of how to enable cross-numerology operation in NR. As one solution, existing features can be used. Certain features can use cross-carrier scheduling, which enables scheduling from a primary cell (Pcell), 120 kHz SCS PDCCH, and a PDSCH of 960 kHz SCS in a secondary cell (Scell). This, however, may have to use two base-band processing chains and support twocell CA, where carriers in intra-band CA are overlapping. Furthermore, it should be noted that CA is a slow and inefficient concept, which may have to use duplicate configuration, radio resource management (RRM) measurements, etc.

Another possible solution is to introduce multiple active BWPs and cross BWP scheduling in a single cell. This solution would need to utilize a different framework from NR framework, which is based on a principle that single BWP is active at any given time. Yet another possible solution may be to define BD and CCE limits per super-slot, i.e., an aggregate of multiple slots. With this solution, 960 kHz PDCCH may have to use the definition of a super-slot as a new unit based on which the BD/CCE limit would be defined, and restrictions to periodicities would apply. In addition, with separate BWPs, fall-back to 120 kHz PDCCH/PDSCH would have to use a BWP change, which may not be agile.

Some embodiments described herein may provide for BWP enhancement (e.g., for HARQ/Scheduling for 60 GHz scenarios, and more specifically for HARQ and scheduling framework for the cases when shared channels operate with a high subcarrier spacing, such as 960 kHz SCS). For example, certain embodiments enable configuration of an anchor and non-anchor BWP pair having the same BWP index, where signals or channels on the anchor BWP are prioritized over signals or channels on the non-anchor BWP. In this way, certain embodiments may provide for prioritization of signals on a single cell, which is determined based on active BWPs in which the signals have been configured. Having the same BWP index for the pair may help to avoid any changes to the BWP switching framework, which allows only 1 BWP index to be activated. This may provide an agile solution that is based on multiple active BWPs, which appear as a single active BWP (e.g., some embodiments may have multiple active BWPs, such as an active anchor BWP and an active non-anchor BWP, where RRC configurations are active for the multiple BWPs at the same time, but where the multiple BWPs appear as a single BWP based on being associated with the same BWP index). In addition, certain embodiments may provide for operation of cross-SCS scheduling in a single cell using a single base-band and without a time penalty, which reduces latency of communications.

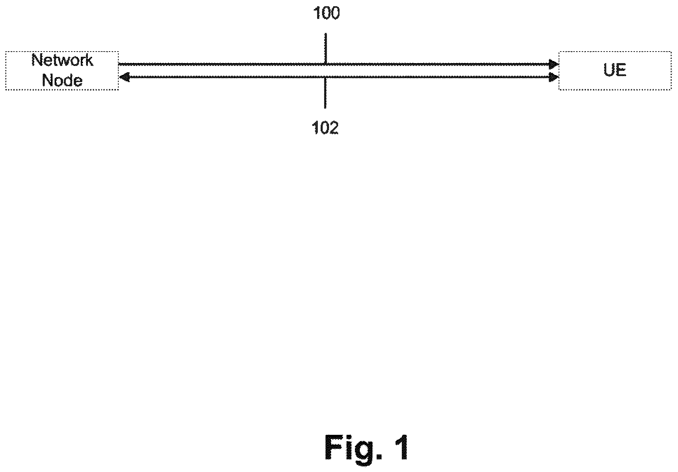

Fig. 1 illustrates an example of BWP enhancement, according to some embodiments. Fig. 1 illustrates a network node (e.g., a gNB) and a UE in communication with each other. In some embodiments, the network node may be a distributed unit (DU) of an integrated access and backhaul (IAB) node, and UE functionalities may be performed by the mobile termination (MT) part of the IAB node.

Prior to the operations illustrated in Fig. 1, the UE, during initial access, may operate on an initial DL/UL BWP. As illustrated at 100, the network node may transmit, to the UE, a configuration of a BWP pair for a same link direction (e.g., uplink, downlink, or side link) in a same cell. The BWP pair may comprise a first BWP and a second BWP. The first BWP and the second BWP may have a same BWP index. As a specific example, in a higher-layer message, a UE may obtain a dedicated configuration of a BWP pair for the same link direction, where each BWP of the BWP pair has the same BWP index.

The first BWP may be an anchor BWP and the second BWP may be a non-anchor BWP. The first BWP may be configured to have a higher priority than the second BWP. For example, the network node may configure and/or determine that an anchor BWP has a higher priority than a non-anchor BWP. The first BWP may be configured to have the higher priority based on being associated with maintaining coverage for one or more UEs. The first BWP may be associated with a lower SCS relative to the second BWP. For example, the anchor BWP may be priority because it may guarantee coverage for the UE and would typically be the BWP with lower SCS. In other words, a BWP may be configured as an anchor BWP based on the BWP being associated with a lower SCS index/mu relative to another BWP and/or the other BWP may be configured as a non-anchor BWP based on the other BWP being associated with a higher SCS index/mu relative to the BWP. For example, a SCS index/mu of 0 may be lower than a SCS index/mu of 1, a SCS index/mu of 1 may be lower than a SCS index/mu of 2, etc. Transmission of signals on an anchor BWP may be prioritized over signals on a non-anchor BWP, as described elsewhere herein.

The first BWP and the second BWP may be explicitly configured. For example, as one alternative embodiment, the anchor BWP and non-anchor BWP may be explicitly configured by the network node (e.g., gNB). Explicitly configuring a BWP may mean that BWP parameters include subparameters identifying the BWP as an anchor BWP or a non-anchor BWP. This may be in contrast to implicit configuration, where the BWP with the lower SCS index (or mu (µ)) may be configured as the anchor BWP or where the BWP with the higher SCS index may be configured as the non-anchor BWP. Additionally, or alternatively, the first BWP may comprise one or more configurations for one or more control channels and the second BWP may comprise one or more configurations for one or more shared data channels. For example, the BWP containing control configurations (e.g., pdcch-Config, or pucch-Config) may be the anchor BWP, and the BWP containing shared channel configurations (e.g., pdsch-Config, or pusch-Config) may be the non-anchor BWP. In some embodiments, the anchor BWP may, in certain respects, operate according to a legacy BWP framework (e.g., in terms of numerology).

The first BWP and the second BWP may each comprise information identifying a frequency location associated with the BWP pair or a numerology associated with the BWP pair. For example, the BWP pair may have content that is in both BWPs, such as frequency location or numerology (e.g., in certain embodiments, numerology may be different for the two BWPs of a BWP pair, but in other embodiments, the numerology may be the same for the two BWPs). Numerologies of the BWP pair may be different and frequency locations of the BWP pair may be at least partially overlapping. In some embodiments, one of the BWPs of a BWP pair may comprise certain information. For example, one BWP (e.g., the anchor BWP) may comprise a pdcch-Config, and the other BWP (e.g., the non-anchor BWP) may comprise a pdsch-Config. In some embodiments, the first BWP and the second BWP may comprise one or more configurations associated with one or more control channels, and scheduling for the first BWP and the second BWP may be based on detecting scheduling of a PDCCH in one or more CORESETs. For example, both BWPs may have a pdcch-Config, but scheduling may be differentiated based on CORESET.

One or more parameters associated with the second BWP may override one or more parameters associated with the first BWP when parameters are applied on the second BWP. One or more non-overridden parameters may be common to both the first BWP and the second BWP. For example, in certain embodiments, a BWP of a BWP pair may be constructed, from a BWP constructed according to a particular NR release, by configuring one BWP to override some of the parameters of the BWP constructed according to a particular NR release. In this case, the BWP constructed according to the particular NR release may be the anchor BWP and the additional BWP may be the non-anchor BWP. Non-overridden parameters may be inherited from the anchor BWP to the non-anchor BWP.

The first BWP and the second BWP may be active at a same time (e.g., RRC configurations for the first BWP and the second BWP may be active at the same time, but the first BWP and the second BWP may appear as a single BWP based on being associated with the same BWP index) but signals and channels of the first and the second BWP may not be transmitted or received at the same time. For example, the anchor and non-anchor BWPs may be active at the same time (but not in operation at the same time, as described elsewhere herein).

The one or more signals or channels on the first BWP may be prioritized relative to the one or more signals on the second BWP based on the first BWP and the second BWP being associated with different numerologies and based on a UE not being capable of concurrent multiple numerology reception or transmission. For example, when different numerology is configured and the UE is not capable of concurrent multiple numerology reception or transmission (which is the case of single baseband (BB)), signals on the anchor BWP may be prioritized over signals on the non-anchor BWP. Additionally, or alternatively, prioritization may be performed semi-statically at the network node and the UE. Additionally, or alternatively, dynamic conflicts may be handled by the network node (e.g., the UE may not expect simultaneous operation of anchor and non-anchor BWPs).

Scheduling timing of the first BWP and the second BWP may follow a cross-carrier cross-numerology framework. In certain embodiments, the non-anchor BWP, which may be configured with a high SCS, may support multi-slot scheduling (e.g., multiple slots with different TBs may be scheduled with single DCI) or shared channel repetition (e.g., a same TB may be scheduled to be repeated on multiple slots with a single DCI). A switching time between the first BWP and the second BWP may be smaller than a symbol duration associated with the first BWP and/or the second BWP or may be less than a cyclic prefix associated with the first BWP and/or the second BWP. For example, switching time between anchor and non-anchor signals may be close to zero (e.g., for UEs not capable of concurrent multiple numerology reception or transmission). A close to zero switching time may be a fraction of the cyclic prefix duration.

In this way, a single active BWP with a single BWP index may be maintained. In addition, certain embodiments may provide a proposed rule of prioritization between these two BWPs, which may help to ensure that a UE does not have to receive two SCSs at the same time, while still maintaining a good configurability of priority signals. The first and the second BWP pair then may be switched to another first and second BWP pair by means of a BWP switching framework.

The UE may, after receiving the configuration of the BWP pair, determine one or more DCI formats according to the configuration of the first bandwidth part (BWP). The UE may monitor one or more other DCI formats according to the configuration of the second BWP. In some embodiments, the UE may determine that the one or more signals or channels for different BWPs may be scheduled to collide. The UE may determine to drop one or more of the one or more signals or channels associated with the second BWP. As illustrated at 102, the network node and the UE may transmit or receive one or more signals or channels on the first BWP and the second BWP. The one or more signals or channels on the first BWP may be prioritized relative to the one or more signals or channels on the second BWP.

As described above, Fig. 1 is provided as an example. Other examples are possible, according to some embodiments.

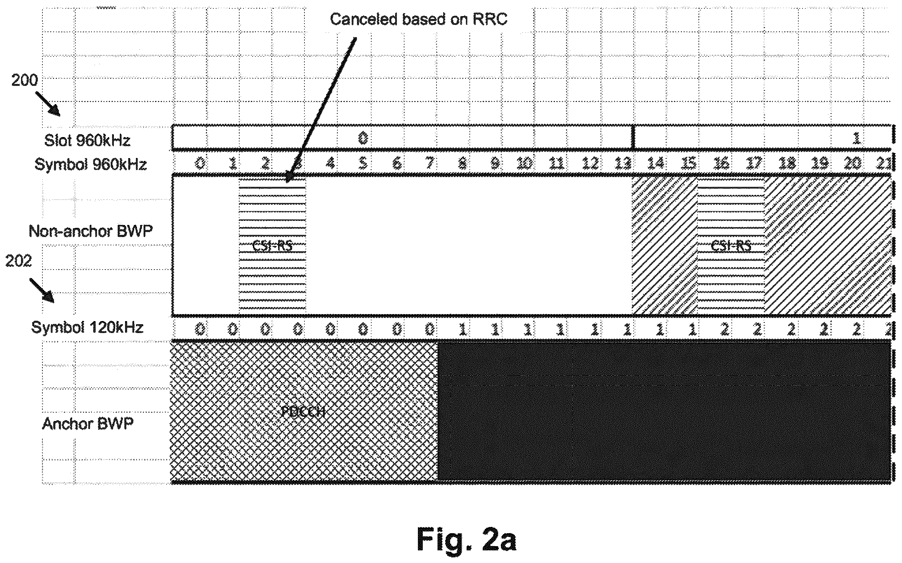

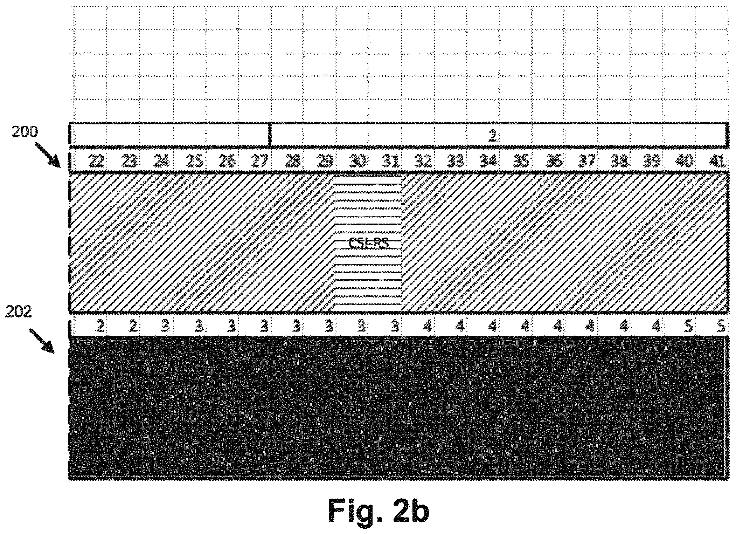

Figs. 2a and 2b illustrate an example of collision handling between anchor and non-anchor BWP signals, according to some embodiments. For example, Figs. 2a and 2b, illustrate operations of a network node and the UE.

As illustrated in Figs. 2a and 2b, at 200, the network node (e.g., a gNB) may configure a non-anchor BWP with, for example, 960kHz subcarrier spacing and, at 202, an anchor BWP with, for example, 120kHz subcarrier spacing. The first BWP and the second BWP may be at least partially overlapping in frequency and may be associated with a single radio frequency (RF). For example, these BWPs may be overlapping and received by a single RF. The network node may configure channel state information reference signal (CSI-RS) in pdsch-Config in the non-anchor BWP with 1 slot periodicity (according to 960 kHz SCS), and may configure PDCCH and CORESET of one OFDM symbol and search space with a periodicity of one slot (according to 120 kHz SCS). In some embodiments, CSI-RS colliding with PDCCH may not be used by the UE for CSI estimation.

As indicated above, Figs. 2a and 2b are provided as examples. Other examples are possible, according to some embodiments.

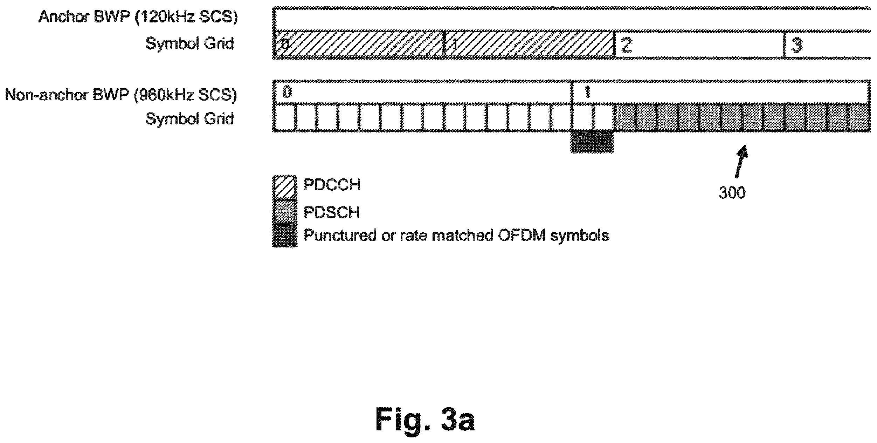

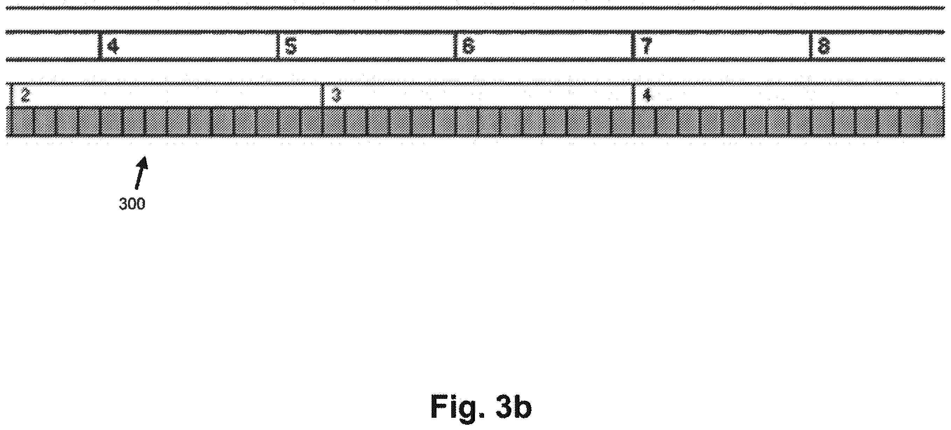

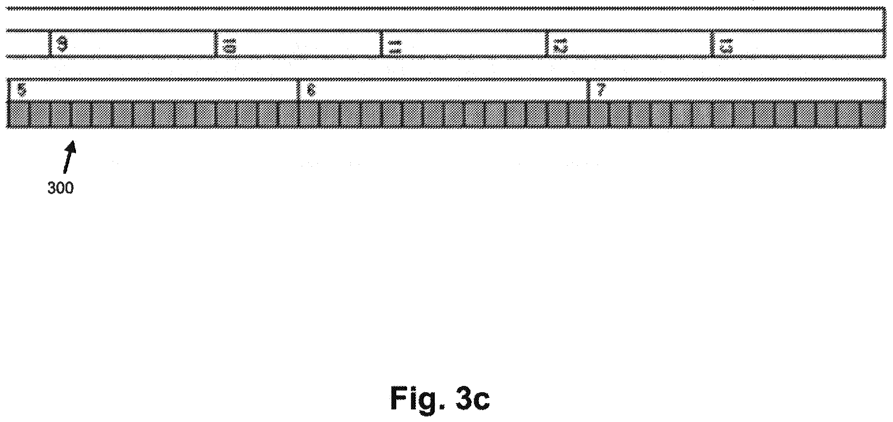

Figs. 3a, 3b, and 3c illustrate an example of a scheduling operation, according to some embodiments. For example, Fig. 3a, 3b, and 3c may illustrate operations of a network node (e.g., a gNB).

As illustrated in Figs. 3a, 3b, and 3c, at 300 by the lighter gray squares, the network node may schedule one or more shared channels on the second BWP. For example, a gNB may configure the anchor BWP with, for example, 120kHz subcarrier spacing, and the non-anchor BWP with, for example, 960kHz subcarrier spacing. The network node (e.g., the gNB) may schedule multi-slot PDSCH on the non-anchor BWP for slots 1-7 in Figs. 3a, 3b, and 3c. The anchor BWP may have a priority and based on that, the two first OFDM symbols of the slot 1 are not transmitted. The example also illustrate that there is no need for a BWP switching delay between the anchor BWP and the non-anchor BWP.

With respect to placement of BWPs and carriers, scs-SpecificCarrier of 120kHz, for example, may have to be nested within scs-SpecificCarrier of 960kHz. In other words, the resource grid between the first and the second BWP can be aligned in both frequency and time. This means that a PRB of the second BWP (960 kHz SCS) may contain 8 PRBs of the first BWP (120 kHz SCS), and a OFDM symbol of the first BWP may contain 8 OFDM symbols of the second BWP, respectively. An aligned PRB grid can be achieved by setting the same point A for both carriers (120kHz and 960khz) and channel bandwidth of the carriers may be set to be identical, for example, 400MHz. However, channel bandwidth of, for example, 120kHz carrier, may be smaller. In this case, the UE may sets its RF according to the larger channel BW of 960kHz carrier. The assumed operation of the system may be that initial BWP is, for example, 120 kHz SCS, as this may provide sufficient coverage over the whole cell area. UEs with sufficiently high link quality, so that they can be served with a higher modulation order and/or a wider bandwidth, may be configured with the anchor and non-anchor BWP pair of the same BWP ID. By maintaining PDCCH on the, for example, 120 kHz SCS, anchor BWP, operation may be improved with respect to mobility.

One or more fallback downlink control information (DCI) may schedule a shared channel on the first BWP and a size of the DCI format and its fields may be determined based on one or more configurations for the first BWP. One or more non-fallback DCI may schedule a shared channel on the second BWP and a size of the DCI may be determined based on one or more configurations for the second BWP. For example, if the network node (e.g., gNB) determines to support PDSCH also on the anchor BWP, it may be achieved such that fall-back DCI-formats _0 may be determined based on the anchor BWP, and non-fall-back DCI formats _1 or _2 may be determined based on the non-anchor BWP. This may avoid further NR specification change to DCI format size determination. The first BWP and the second BWP may comprise one or more control channel configurations, and a DCI format size may be different in at least one CORESET of the first BWP and at least one CORESET of the second BWP. Alternatively, pdcch-Config, for example, may be in both the anchor and the non-anchor BWP, and DCI format size may be different in CORESETs of the anchor BWP and CORESETs of the non-anchor BWP. This may, however, increase the number DCI formats the UE has to monitor in a cell.

As described above, Figs. 3a, 3b, and 3c are provided as examples. Other examples are possible, according to some embodiments.

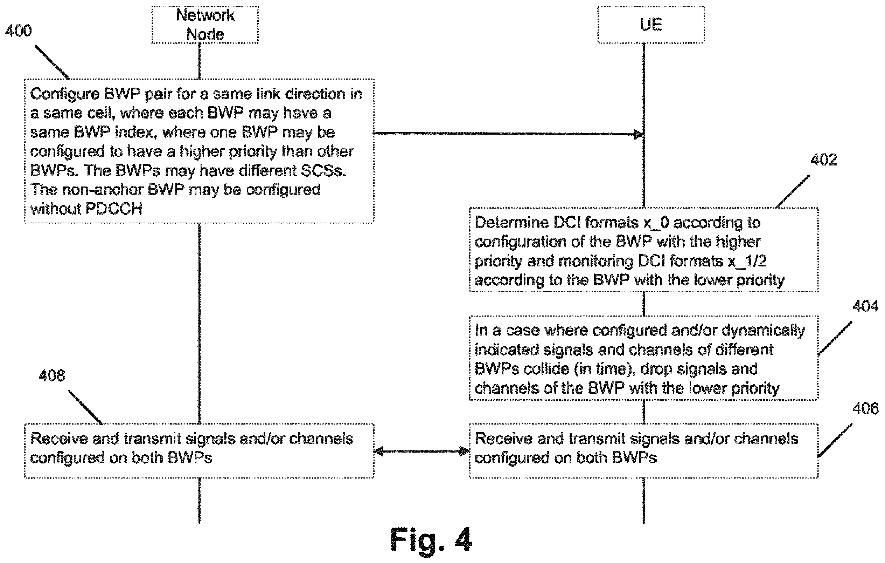

Fig. 4 illustrates an example signal diagram of a network node and UE interaction, according to some embodiments. Fig. 4 illustrates a network node (e.g., a gNB) and a UE.

As illustrated at 400, the network node may configure, to the UE, a BWP for a same link direction (e.g., downlink, uplink, or sidelink) in a same cell. Each BWP of the BWP pair may have a same BWP index. One BWP may be configured to have a higher priority than other BWPs. The BWPs may have different SCSs. The non-anchor BWP may be configured without PDCCH.

As illustrated at 402, the UE may determine DCI formats. For example, the UE may determine DCI formats 0_0 and/or 1_0 (e.g., scheduling of PUSCH or PDSCH in one cell) according to a configuration of the BWP with the higher priority. In addition, the UE may monitor DCI formats. For example, the UE may monitor DCI formats x_1/2, e.g., DCI formats 0_1, 0_2, 1_1, and/or 1_2 where, e.g., formats 1_1 and 1_2 may schedule PDSCH in one cell and, e.g., formats 0_1 and 0_2 may schedule PUSCH in one cell, according to the BWP with the lower priority.

As illustrated at 404, in a case where configured and/or dynamically indicated signals and channels of different BWPs collide (in time), the UE may drop signals and channels of the BWP with the lower priority. As illustrated at 406 and 408, the network node and/or the UE may receive and/or transmit signals configured on both BWPs. The dropping may be done in such a manner that the overlapping portion is dropped. The dropping may be performed by puncturing the overlapping symbols on the BWP with the lower priority, or by rate matching the channels of the BWP with the lower priority around the overlapping symbols.

As described above, Fig. 4 is provided as an example. Other examples are possible, according to some embodiments.

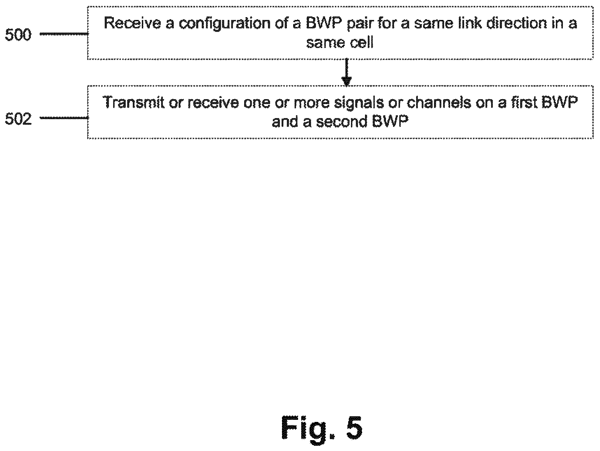

Fig. 5 illustrates an example flow diagram of a method, according to some embodiments. For example, Fig. 5 shows example operations of a UE (e.g., apparatus 20). Some of the operations illustrated in Fig. 5 may be similar to some operations shown in, and described with respect to, Figs. 1-4.

In an embodiment, the method may include, at 500, receiving a configuration of a BWP pair for a same link direction in a same cell. In some embodiments, the BWP pair may comprise a first BWP and a second BWP. In some embodiments, the first BWP and the second BWP may have a same BWP index. In some embodiments, the first BWP may be configured to have a higher priority than the second BWP. As illustrated at 502, the method may include transmitting or receiving one or more signals or channels on the first BWP and the second BWP. In some embodiments, the one or more signals or channels on the first BWP may be prioritized relative to the one or more signals or channels on the second BWP.

In some embodiments, the first BWP may be configured to have the higher priority based on being associated with maintaining coverage for the UE. In some embodiments, the first BWP may be associated with a lower SCS relative to the second BWP. In some embodiments, the first BWP and the second BWP may be explicitly configured. In some embodiments, the first BWP may comprise one or more configurations for one or more control channels and the second BWP may comprise one or more configurations for one or more shared data channels.

In some embodiments, the first BWP and the second BWP may each comprise information identifying a frequency location associated with the BWP pair and a numerology associated with the BWP pair. In some embodiments, numerologies of the bandwidth part (BWP) pair may be different. In some embodiments, frequency locations of the BWP pair may be at least partially overlapping. In some embodiments, the first BWP and the second BWP may comprise one or more configurations associated with one or more control channels. In some embodiments, scheduling for the first BWP and the second BWP may be based on detecting scheduling of a PDCCH in one or more CORESETs. In some embodiments, one or more parameters associated with the second BWP may override one or more parameters associated with the first BWP when applied on the second bandwidth part (BWP). In some embodiments, one or more non-overridden parameters may be common to both the first BWP and the second BWP.

In some embodiments, the first BWP and the second BWP may be active at a same time but signals and channels of the second bandwidth part (BWP) cannot be transmitted or received at the same time with signals and channels of the first bandwidth part (BWP). In some embodiments, the one or more signals or channels on the first BWP may be prioritized relative to the one or more signals on the second BWP based on the first BWP and the second BWP being associated with different numerologies and based on the UE not being capable of concurrent multiple numerology reception or transmission. In some embodiments, scheduling timing of the first BWP and the second BWP may follow a cross-carrier cross-numerology framework. In some embodiments, a switching time between the first BWP and the second BWP may be smaller than a symbol duration associated with the first BWP and/or the second BWP or less than a cyclic prefix associated with the first bandwidth part (BWP) and/or the second bandwidth part (BWP).

In some embodiments, the first BWP and the second BWP may be at least partially overlapping in frequency and are associated with a single RF. In some embodiments, one or more fallback DCI may schedule a shared channel on the first BWP and a size of the DCI format and corresponding fields may be based on one or more configurations for the first BWP. In some embodiments, one or more non-fallback DCI may schedule a shared channel on the second BWP and a size of the DCI format and corresponding fields may be determined based on one or more configurations for the second BWP. In some embodiments, the first BWP and the second BWP may comprise one or more control channel configurations. In some embodiments, a DCI format size may be different in at least one CORESET of the first BWP and at least one CORESET of the second BWP.

In some embodiments, the method may include determining one or more DCI formats according to the configuration of the first BWP. In some embodiments, the method may include monitoring one or more other DCI formats according to the configuration of the second BWP. In some embodiments, the method may include determining that the one or more signals or channels for different BWPs may be scheduled to collide. In some embodiments, the method may include determining to drop one or more of the one or more signals or channels associated with the second BWP. In some embodiments, the first BWP may be an anchor BWP and the second BWP may be a non-anchor BWP.

As described above, Fig. 5 is provided as an example. Other examples are possible according to some embodiments.

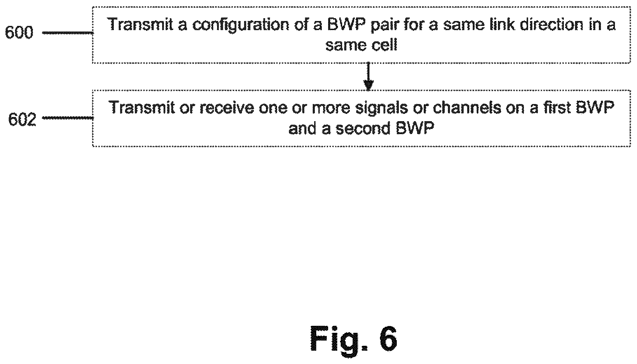

Fig. 6 illustrates an example flow diagram of a method, according to some embodiments. For example, Fig. 6 shows example operations of a network node (e.g., apparatus 10). Some of the operations illustrated in Fig. 6 may be similar to some operations shown in, and described with respect to, Figs. 1-4.

In an embodiment, the method may include, at 600, transmitting a configuration of a BWP pair for a same link direction in a same cell. In some embodiments, the BWP pair may comprise a first BWP and a second BWP. In some embodiments, the first BWP and the second BWP may have a same BWP index. In some embodiments, the first BWP may be configured to have a higher priority than the second BWP. In an embodiment, the method may include, at 602, transmitting or receiving one or more signals or channels on the first BWP and the second BWP. In some embodiments, the one or more signals or channels on the first BWP may be prioritized relative to the one or more signals or channels on the second BWP.

In some embodiments, the first BWP may be configured to have the higher priority based on being associated with maintaining coverage for one or more UEs. In some embodiments, the first BWP may be associated with a lower SCS relative to the second BWP. In some embodiments, the first BWP and the second BWP may be explicitly configured. In some embodiments, the first BWP may comprise one or more configurations for one or more control channels and the second BWP may comprise one or more configurations for one or more shared data channels.

In some embodiments, the first BWP and the second BWP may each comprise information identifying a frequency location associated with the BWP pair or a numerology associated with the BWP pair. In some embodiments, numerologies of the BWP pair may be different. In some embodiments, frequency locations of the BWP pair may be at least partially overlapping. In some embodiments, the first BWP and the second BWP may comprise one or more configurations associated with one or more control channels. In some embodiments, scheduling for the first BWP and the second BWP may be based on detecting scheduling of a PDCCH in one or more CORESETs.

In some embodiments, one or more parameters associated with the second BWP may override one or more parameters associated with the first BWP when applied on the second bandwidth part (BWP). In some embodiments, one or more non-overridden parameters may be common to both the first BWP and the second BWP. In some embodiments, the first BWP and the second BWP may be active at a same time but signals and channels of the second BWP cannot be transmitted or received at the same time with signals and channels of the first bandwidth part (BWP). In some embodiments, the one or more signals or channels on the first BWP may be prioritized relative to the one or more signals on the second BWP based on the first BWP and the second BWP being associated with different numerologies and based on a UE not being capable of concurrent multiple numerology reception or transmission. In some embodiments, scheduling timing of the first BWP and the second BWP may follow a cross-carrier cross-numerology framework. In some embodiments, a switching time between the first BWP and the second BWP may be smaller than a symbol duration associated with the first BWP and/or the second BWP or less than a cyclic prefix associated with the first bandwidth part (BWP) and/or the second bandwidth part (BWP).

In some embodiments, the first BWP and the second BWP may be at least partially overlapping in frequency and may be associated with a single RF. In some embodiments, the method may include scheduling one or more signals or channels on the second BWP. In some embodiments, the method may include determining to not transmit or receive a set of symbols of the one or more signals or channels based on the first BWP having the higher priority and at least one of the one or more signals or channels on the first bandwidth part overlapping in time with the set of symbols. In some embodiments, one or more fallback DCI may schedule a shared channel on the first BWP and a size of the DCI format and corresponding fields may be determined based on one or more configurations for the first BWP. In some embodiments, one or more non-fallback DCI may schedule a shared channel on the second BWP and a size of the DCI format and corresponding fields may be determined based on one or more configurations for the second BWP. In some embodiments, the first BWP and the second BWP may comprise one or more control channel configurations. In some embodiments, a DCI format size may be different in at least one CORESET of the first BWP and at least one CORESET of the second BWP. In some embodiments, the first BWP may be an anchor BWP and the second BWP may be a non-anchor BWP.

As described above, Fig. 6 is provided as an example. Other examples are possible according to some embodiments.

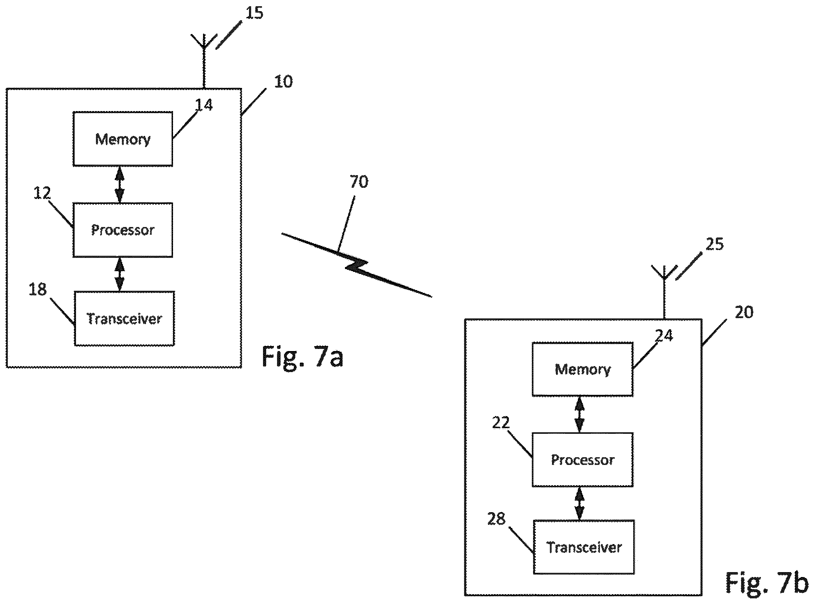

Fig. 7a illustrates an example of an apparatus 10 according to an embodiment. In an embodiment, apparatus 10 may be a node, host, or server in a communications network or serving such a network. For example, apparatus 10 may be a network node, satellite, base station, a Node B, an evolved Node B (eNB), 5G Node B or access point, next generation Node B (NG-NB or gNB), and/or a WLAN access point, associated with a radio access network, such as a LTE network, 5G or NR. In example embodiments, apparatus 10 may be an eNB in LTE or gNB in 5G. In some embodiments, the network node may be a distributed unit (DU) of an integrated access and backhaul (IAB) node.

It should be understood that, in some example embodiments, apparatus 10 may be comprised of an edge cloud server as a distributed computing system where the server and the radio node may be stand-alone apparatuses communicating with each other via a radio path or via a wired connection, or they may be located in a same entity communicating via a wired connection. For instance, in certain example embodiments where apparatus 10 represents a gNB, it may be configured in a central unit (CU) and distributed unit (DU) architecture that divides the gNB functionality. In such an architecture, the CU may be a logical node that includes gNB functions such as transfer of user data, mobility control, radio access network sharing, positioning, and/or session management, etc. The CU may control the operation of DU(s) over a front-haul interface. The DU may be a logical node that includes a subset of the gNB functions, depending on the functional split option. It should be noted that one of ordinary skill in the art would understand that apparatus 10 may include components or features not shown in Fig. 7a.

As illustrated in the example of Fig. 7a, apparatus 10 may include a processor 12 for processing information and executing instructions or operations. Processor 12 may be any type of general or specific purpose processor. In fact, processor 12 may include one or more of general-purpose computers, special purpose computers, microprocessors, digital signal processors (DSPs), field-programmable gate arrays (FPGAs), application-specific integrated circuits (ASICs), and processors based on a multi-core processor architecture, as examples. While a single processor 12 is shown in Fig. 7a, multiple processors may be utilized according to other embodiments. For example, it should be understood that, in certain embodiments, apparatus 10 may include two or more processors that may form a multiprocessor system (e.g., in this case processor 12 may represent a multiprocessor) that may support multiprocessing. In certain embodiments, the multiprocessor system may be tightly coupled or loosely coupled (e.g., to form a computer cluster).

Processor 12 may perform functions associated with the operation of apparatus 10, which may include, for example, precoding of antenna gain/phase parameters, encoding and decoding of individual bits forming a communication message, formatting of information, and overall control of the apparatus 10, including processes related to management of communication resources.

Apparatus 10 may further include or be coupled to a memory 14 (internal or external), which may be coupled to processor 12, for storing information and instructions that may be executed by processor 12. Memory **14** may be one or more memories and of any type suitable to the local application environment, and may be implemented using any suitable volatile or nonvolatile data storage technology such as a semiconductor-based memory device, a magnetic memory device and system, an optical memory device and system, fixed memory, and/or removable memory. For example, memory 14 can be comprised of any combination of random access memory (RAM), read only memory (ROM), static storage such as a magnetic or optical disk, hard disk drive (HDD), or any other type of non-transitory machine or computer readable media. The instructions stored in memory 14 may include program instructions or computer program code that, when executed by processor 12, enable the apparatus 10 to perform tasks as described herein.

In an embodiment, apparatus 10 may further include or be coupled to (internal or external) a drive or port that is configured to accept and read an external computer readable storage medium, such as an optical disc, USB drive, flash drive, or any other storage medium. For example, the external computer readable storage medium may store a computer program or software for execution by processor 12 and/or apparatus 10.

In some embodiments, apparatus 10 may also include or be coupled to one or more antennas 15 for transmitting and receiving signals and/or data to and from apparatus 10. Apparatus 10 may further include or be coupled to a transceiver 18 configured to transmit and receive information. The transceiver 18 may include, for example, a plurality of radio interfaces that may be coupled to the antenna(s) 15. The radio interfaces may correspond to a plurality of radio access technologies including one or more of GSM, NB-IoT, LTE, 5G, WLAN, Bluetooth, BT-LE, NFC, radio frequency identifier (RFID), ultrawideband (UWB), MulteFire, and the like. The radio interface may include components, such as filters, converters (for example, digital-to-analog converters and the like), mappers, a Fast Fourier Transform (FFT) module, and the like, to generate symbols for a transmission via one or more downlinks and to receive symbols (for example, via an uplink).

As such, transceiver 18 may be configured to modulate information on to a carrier waveform for transmission by the antenna(s) 15 and demodulate information received via the antenna(s) 15 for further processing by other elements of apparatus 10. In other embodiments, transceiver 18 may be capable of transmitting and receiving signals or data directly. Additionally or alternatively, in some embodiments, apparatus 10 may include an input and/or output device (I/O device).

In an embodiment, memory 14 may store software modules that provide functionality when executed by processor 12. The modules may include, for example, an operating system that provides operating system functionality for apparatus 10. The memory may also store one or more functional modules, such as an application or program, to provide additional functionality for apparatus 10. The components of apparatus 10 may be implemented in hardware, or as any suitable combination of hardware and software.

According to some embodiments, processor 12 and memory 14 may be included in or may form a part of processing circuitry or control circuitry. In addition, in some embodiments, transceiver 18 may be included in or may form a part of transceiver circuitry.

As used herein, the term "circuitry" may refer to hardware-only circuitry implementations (e.g., analog and/or digital circuitry), combinations of hardware circuits and software, combinations of analog and/or digital hardware circuits with software/firmware, any portions of hardware processor(s) with software (including digital signal processors) that work together to case an apparatus (e.g., apparatus 10) to perform various functions, and/or hardware circuit(s) and/or processor(s), or portions thereof, that use software for operation but where the software may not be present when it is not needed for operation. As a further example, as used herein, the term "circuitry" may also cover an implementation of merely a hardware circuit or processor (or multiple processors), or portion of a hardware circuit or processor, and its accompanying software and/or firmware. The term circuitry may also cover, for example, a baseband integrated circuit in a server, cellular network node or device, or other computing or network device.

As introduced above, in certain embodiments, apparatus 10 may be a network node or RAN node, such as a base station, access point, Node B, eNB, gNB, WLAN access point, or the like.

According to certain embodiments, apparatus 10 may be controlled by memory 14 and processor 12 to perform the functions associated with any of the embodiments described herein, such as some operations of flow or signaling diagrams illustrated in Figs. 1-6.

For instance, in one embodiment, apparatus 10 may be controlled by memory 14 and processor 12 to transmit a configuration of a BWP pair for a same link direction in a same cell. The BWP pair may comprise a first BWP and a second BWP. The first BWP and the second BWP may have a same BWP index. The first BWP may be configured to have a higher priority than the second BWP. In one embodiment, apparatus 10 may be controlled by memory 14 and processor 12 to transmit or receive one or more signals or channels on the first BWP and the second BWP. The one or more signals or channels on the first BWP may be prioritized relative to the one or more signals or channels on the second BWP.

Fig. 7b illustrates an example of an apparatus 20 according to another embodiment. In an embodiment, apparatus 20 may be a node or element in a communications network or associated with such a network, such as a UE, mobile equipment (ME), mobile station, mobile device, stationary device, IoT device, or other device. As described herein, a UE may alternatively be referred to as, for example, a mobile station, mobile equipment, mobile unit, mobile device, user device, subscriber station, wireless terminal, tablet, smart phone, IoT device, sensor or NB-IoT device, or the like. In some embodiments, the UE functionalities may be performed by the mobile termination (MT) part of an IAB node. As one example, apparatus 20 may be implemented in, for instance, a wireless handheld device, a wireless plug-in accessory, or the like.

In some example embodiments, apparatus 20 may include one or more processors, one or more computer-readable storage medium (for example, memory, storage, or the like), one or more radio access components (for example, a modem, a transceiver, or the like), and/or a user interface. In some embodiments, apparatus 20 may be configured to operate using one or more radio access technologies, such as GSM, LTE, LTE-A, NR, 5G, WLAN, WiFi, NB-IoT, Bluetooth, NFC, MulteFire, and/or any other radio access technologies. It should be noted that one of ordinary skill in the art would understand that apparatus 20 may include components or features not shown in Fig. 7b.

As illustrated in the example of Fig. 7b, apparatus 20 may include or be coupled to a processor 22 for processing information and executing instructions or operations. Processor 22 may be any type of general or specific purpose processor. In fact, processor 22 may include one or more of general-purpose computers, special purpose computers, microprocessors, digital signal processors (DSPs), field-programmable gate arrays (FPGAs), application-specific integrated circuits (ASICs), and processors based on a multi-core processor architecture, as examples. While a single processor 22 is shown in Fig. 7b, multiple processors may be utilized according to other embodiments. For example, it should be understood that, in certain embodiments, apparatus 20 may include two or more processors that may form a multiprocessor system (e.g., in this case processor 22 may represent a multiprocessor) that may support multiprocessing. In certain embodiments, the multiprocessor system may be tightly coupled or loosely coupled (e.g., to form a computer cluster).

Processor 22 may perform functions associated with the operation of apparatus 20 including, as some examples, precoding of antenna gain/phase parameters, encoding and decoding of individual bits forming a communication message, formatting of information, and overall control of the apparatus 20, including processes related to management of communication resources.

Apparatus 20 may further include or be coupled to a memory 24 (internal or external), which may be coupled to processor 22, for storing information and instructions that may be executed by processor 22. Memory 24 may be one or more memories and of any type suitable to the local application environment, and may be implemented using any suitable volatile or nonvolatile data storage technology such as a semiconductor-based memory device, a magnetic memory device and system, an optical memory device and system, fixed memory, and/or removable memory. For example, memory 24 can be comprised of any combination of random access memory (RAM), read only memory (ROM), static storage such as a magnetic or optical disk, hard disk drive (HDD), or any other type of non-transitory machine or computer readable media. The instructions stored in memory 24 may include program instructions or computer program code that, when executed by processor 22, enable the apparatus 20 to perform tasks as described herein.

In an embodiment, apparatus 20 may further include or be coupled to (internal or external) a drive or port that is configured to accept and read an external computer readable storage medium, such as an optical disc, USB drive, flash drive, or any other storage medium. For example, the external computer readable storage medium may store a computer program or software for execution by processor 22 and/or apparatus 20.

In some embodiments, apparatus 20 may also include or be coupled to one or more antennas 25 for receiving a downlink signal and for transmitting via an uplink from apparatus 20. Apparatus 20 may further include a transceiver 28 configured to transmit and receive information. The transceiver 28 may also include a radio interface (e.g., a modem) coupled to the antenna 25. The radio interface may correspond to a plurality of radio access technologies including one or more of GSM, LTE, LTE-A, 5G, NR, WLAN, NB-IoT, Bluetooth, BT-LE, NFC, RFID, UWB, and the like. The radio interface may include other components, such as filters, converters (for example, digital-to-analog converters and the like), symbol demappers, signal shaping components, an Inverse Fast Fourier Transform (IFFT) module, and the like, to process symbols, such as OFDMA symbols, carried by a downlink or an uplink.

For instance, transceiver 28 may be configured to modulate information on to a carrier waveform for transmission by the antenna(s) 25 and demodulate information received via the antenna(s) 25 for further processing by other elements of apparatus 20. In other embodiments, transceiver 28 may be capable of transmitting and receiving signals or data directly. Additionally or alternatively, in some embodiments, apparatus 20 may include an input and/or output device (I/O device). In certain embodiments, apparatus 20 may further include a user interface, such as a graphical user interface or touchscreen.

In an embodiment, memory 24 stores software modules that provide functionality when executed by processor 22. The modules may include, for example, an operating system that provides operating system functionality for apparatus 20. The memory may also store one or more functional modules, such as an application or program, to provide additional functionality for apparatus 20. The components of apparatus 20 may be implemented in hardware, or as any suitable combination of hardware and software. According to an example embodiment, apparatus 20 may optionally be configured to communicate with apparatus 10 via a wireless or wired communications link 70 according to any radio access technology, such as NR.

According to some embodiments, processor 22 and memory 24 may be included in or may form a part of processing circuitry or control circuitry. In addition, in some embodiments, transceiver 28 may be included in or may form a part of transceiving circuitry.

As discussed above, according to some embodiments, apparatus 20 may be a UE, mobile device, mobile station, ME, IoT device and/or NB-IoT device, for example. According to certain embodiments, apparatus 20 may be controlled by memory 24 and processor 22 to perform the functions associated with example embodiments described herein. For example, in some embodiments, apparatus 20 may be configured to perform one or more of the processes depicted in any of the flow charts or signaling diagrams described herein, such as those illustrated in Figs. 1-6.

For instance, in one embodiment, apparatus 20 may be controlled by memory 24 and processor 22 to receive a configuration of a BWP pair for a same link direction in a same cell. In some embodiments, the BWP pair may comprise a first BWP and a second BWP. In some embodiments, the first BWP and the second BWP may have a same BWP index. In some embodiments, the first BWP may be configured to have a higher priority than the second BWP. In one embodiment, apparatus 20 may be controlled by memory 24 and processor 22 to transmit or receive one or more signals or channels on the first BWP and the second BWP. In some embodiments, the one or more signals or channels on the first BWP may be prioritized relative to the one or more signals or channels on the second BWP.

Therefore, certain example embodiments provide several technological improvements, enhancements, and/or advantages over existing technological processes. For example, one benefit of some example embodiments is robust PDCCH coverage and avoidance of infeasible high PDCCH monitoring rates. In addition, certain embodiments described herein may provide an agile solution with less RRC overhead compared to CA. Further, certain embodiments may provide for the possibility of implementation with a single BB. Accordingly, the use of some example embodiments results in improved functioning of communications networks and their nodes and, therefore constitute an improvement at least to the technological field of BWP configuration, among others.

In some example embodiments, the functionality of any of the methods, processes, signaling diagrams, algorithms or flow charts described herein may be implemented by software and/or computer program code or portions of code stored in memory or other computer readable or tangible media, and executed by a processor.

In some example embodiments, an apparatus may be included or be associated with at least one software application, module, unit or entity configured as arithmetic operation(s), or as a program or portions of it (including an added or updated software routine), executed by at least one operation processor. Programs, also called program products or computer programs, including software routines, applets and macros, may be stored in any apparatus-readable data storage medium and may include program instructions to perform particular tasks.

A computer program product may include one or more computer-executable components which, when the program is run, are configured to carry out some example embodiments. The one or more computer-executable components may be at least one software code or portions of code. Modifications and configurations required for implementing functionality of an example embodiment may be performed as routine(s), which may be implemented as added or updated software routine(s). In one example, software routine(s) may be downloaded into the apparatus.

As an example, software or a computer program code or portions of code may be in a source code form, object code form, or in some intermediate form, and it may be stored in some sort of carrier, distribution medium, or computer readable medium, which may be any entity or device capable of carrying the program. Such carriers may include a record medium, computer memory, read-only memory, photoelectrical and/or electrical carrier signal, telecommunications signal, and/or software distribution package, for example. Depending on the processing power needed, the computer program may be executed in a single electronic digital computer or it may be distributed amongst a number of computers. The computer readable medium or computer readable storage medium may be a non-transitory medium.

In other example embodiments, the functionality may be performed by hardware or circuitry included in an apparatus (e.g., apparatus 10 or apparatus 20), for example through the use of an application specific integrated circuit (ASIC), a programmable gate array (PGA), a field programmable gate array (FPGA), or any other combination of hardware and software. In yet another example embodiment, the functionality may be implemented as a signal, such as a non-tangible means that can be carried by an electromagnetic signal downloaded from the Internet or other network.

According to an example embodiment, an apparatus, such as a node, device, or a corresponding component, may be configured as circuitry, a computer or a microprocessor, such as single-chip computer element, or as a chipset, which may include at least a memory for providing storage capacity used for arithmetic operation(s) and/or an operation processor for executing the arithmetic operation(s).

Example embodiments described herein apply equally to both singular and plural implementations, regardless of whether singular or plural language is used in connection with describing certain embodiments. For example, an embodiment that describes operations of a single network node equally applies to embodiments that include multiple instances of the network node, and vice versa.

One having ordinary skill in the art will readily understand that the example embodiments as discussed above may be practiced with operations in a different order, and/or with hardware elements in configurations which are different than those which are disclosed. Therefore, although some embodiments have been described based upon these example preferred embodiments, it would be apparent to those of skill in the art that certain modifications, variations, and alternative constructions would be apparent, while remaining within the scope of example embodiments as defined in the appended claims.

According to a first embodiment, a method may include transmitting a configuration of a BWP pair for a same link direction in a same cell. The BWP pair may comprise a first BWP and a second BWP. The first BWP and the second BWP may have a same BWP index. The first BWP may be configured to have a higher priority than the second BWP. The method may include transmitting or receiving one or more signals or channels on the first BWP and the second BWP. The one or more signals or channels on the first BWP may be prioritized relative to the one or more signals or channels on the second BWP.

In a variant, the first BWP may be configured to have the higher priority based on being associated with maintaining coverage for one or more UEs. In a variant, the first BWP may be associated with a lower SCS relative to the second BWP. In a variant, the first BWP and the second BWP may be explicitly configured. In a variant, the first BWP may comprise one or more configurations for one or more control channels and the second BWP may comprise one or more configurations for one or more shared data channels.

In a variant, the first BWP and the second BWP may each comprise information identifying a frequency location associated with the BWP pair or a numerology associated with the BWP pair. In a variant, numerologies of the BWP pair may be different. In a variant, frequency locations of the BWP pair may be at least partially overlapping. In a variant, the first BWP and the second BWP may comprise one or more configurations associated with one or more control channels. In a variant, scheduling for the first BWP and the second BWP may be based on detecting scheduling of a PDCCH in one or more CORESETs.

In a variant, one or more parameters associated with the second BWP may override one or more parameters associated with the first BWP when applied on the second bandwidth part (BWP). In a variant, one or more non-overridden parameters may be common to both the first BWP and the second BWP. In a variant, the first BWP and the second BWP may be active at a same time but signals and channels of the second BWP cannot be transmitted or received at the same time with signals and channels of the first bandwidth part (BWP). In a variant, the one or more signals or channels on the first BWP may be prioritized relative to the one or more signals on the second BWP based on the first BWP and the second BWP being associated with different numerologies and based on a UE not being capable of concurrent multiple numerology reception or transmission. In a variant, scheduling timing of the first BWP and the second BWP may follow a cross-carrier cross-numerology framework. In a variant, a switching time between the first BWP and the second BWP may be smaller than a symbol duration associated with the first BWP and/or the second BWP or less than a cyclic prefix associated with the first bandwidth part (BWP) and/or the second bandwidth part (BWP).

In a variant, the first BWP and the second BWP may be at least partially overlapping in frequency and may be associated with a single RF. In a variant, the method may include scheduling one or more signals or channels on the second BWP. In a variant, the method may include determining to not transmit or receive a set of symbols of the one or more signals or channels based on the first BWP having the higher priority and at least one of the one or more signals or channels on the first bandwidth part (BWP) overlapping in time with the set of symbols. In a variant, one or more fallback DCI may schedule a shared channel on the first BWP and a size of the DCI format and corresponding fields may be determined based on one or more configurations for the first BWP. In a variant, one or more non-fallback DCI may schedule a shared channel on the second BWP and a size of the DCI format and corresponding fields may be determined based on one or more configurations for the second BWP. In a variant, the first BWP and the second BWP may comprise one or more control channel configurations. In a variant, a DCI format size may be different in at least one CORESET of the first BWP and at least one CORESET of the second BWP. In a variant, the first BWP may be an anchor BWP and the second BWP may be a non-anchor BWP.

According to a second embodiment, a method may include receiving a configuration of a BWP pair for a same link direction in a same cell. In a variant, the BWP pair may comprise a first BWP and a second BWP. In a variant, the first BWP and the second BWP may have a same BWP index. In a variant, the first BWP may be configured to have a higher priority than the second BWP. The method may include transmitting or receiving one or more signals or channels on the first BWP and the second BWP. In a variant, the one or more signals or channels on the first BWP may be prioritized relative to the one or more signals or channels on the second BWP.

In a variant, the first bandwidth part (BWP) may be configured to have the higher priority based on being associated with maintaining coverage for the UE. In a variant, the first BWP may be associated with a lower SCS relative to the second BWP. In a variant, the first BWP and the second BWP may be explicitly configured. In a variant, the first BWP may comprise one or more configurations for one or more control channels and the second BWP may comprise one or more configurations for one or more shared data channels.

In a variant, the first BWP and the second BWP may each comprise information identifying a frequency location associated with the BWP pair and a numerology associated with the BWP pair. In a variant, numerologies of the bandwidth part (BWP) pair may be different. In a variant, frequency locations of the BWP pair may be at least partially overlapping. In a variant, the first BWP and the second BWP may comprise one or more configurations associated with one or more control channels. In a variant, scheduling for the first BWP and the second BWP may be based on detecting scheduling of a PDCCH in one or more CORESETs. In a variant, one or more parameters associated with the second BWP may override one or more parameters associated with the first BWP when applied on the second bandwidth part (BWP). In a variant, one or more non-overridden parameters may be common to both the first BWP and the second BWP.

In a variant, the first BWP and the second BWP may be active at a same time but signals and channels of the second bandwidth part (BWP) cannot be transmitted or received at the same time with signals and channels of the first bandwidth part (BWP). In a variant, the one or more signals or channels on the first BWP may be prioritized relative to the one or more signals on the second BWP based on the first BWP and the second BWP being associated with different numerologies and based on the UE not being capable of concurrent multiple numerology reception or transmission. In a variant, scheduling timing of the first BWP and the second BWP may follow a cross-carrier cross-numerology framework. In a variant, a switching time between the first BWP and the second BWP may be smaller than a symbol duration associated with the first BWP and/or the second BWP or less than a cyclic prefix associated with the first bandwidth part (BWP) and/or the second bandwidth part (BWP).

In a variant, the first BWP and the second BWP may be at least partially overlapping in frequency and may be associated with a single RF. In a variant, one or more fallback DCI may schedule a shared channel on the first BWP and a size of the DCI format and corresponding fields may be based on one or more configurations for the first BWP. In a variant, one or more non-fallback DCI may schedule a shared channel on the second BWP and a size of the DCI format and corresponding fields may be determined based on one or more configurations for the second BWP. In a variant, the first BWP and the second BWP may comprise one or more control channel configurations. In a variant, a DCI format size may be different in at least one CORESET of the first BWP and at least one CORESET of the second BWP.

In a variant, the method may include determining one or more DCI formats according to the configuration of the first BWP. In a variant, the method may include monitoring one or more other DCI formats according to the configuration of the second BWP. In a variant, the method may include determining that the one or more signals or channels for different BWPs may be scheduled to collide. In a variant, the method may include determining to drop one or more of the one or more signals or channels associated with the second BWP. In a variant, the first BWP may be an anchor BWP and the second BWP may be a non-anchor BWP.

A third embodiment may be directed to an apparatus including at least one processor and at least one memory comprising computer program code. The at least one memory and computer program code may be configured, with the at least one processor, to cause the apparatus at least to perform the method according to the first embodiment or the second embodiment, or any of the variants discussed above.

A fourth embodiment may be directed to an apparatus that may include circuitry configured to perform the method according to the first embodiment or the second embodiment, or any of the variants discussed above.

A fifth embodiment may be directed to an apparatus that may include means for performing the method according to the first embodiment or the second embodiment, or any of the variants discussed above.

A sixth embodiment may be directed to a computer readable medium comprising program instructions stored thereon for performing at least the method according to the first embodiment or the second embodiment, or any of the variants discussed above.

A seventh embodiment may be directed to a computer program product encoding instructions for performing at least the method according to the first embodiment or the second embodiment, or any of the variants discussed above.

### PARTIAL GLOSSARY

- BB: Baseband
- BWP: Bandwidth Part
- CA: Carrier Aggregation
- CP: Cyclic Prefix
- CCE: Control Channel Element
- CORESET: Control Resource Set
- CSI: Channel State Information
- DCI: Downlink control information
- DL: Downlink
- FFT: Fast Fourier Transform
- FR: Frequency Range
- gNB: NR Base Station
- HARQ: Hybrid Automatic Request
- NR-U: New Radio Unlicensed
- OFDM: Orthogonal Frequency Division Multiplex
- PDCCH: Physical Downlink Control Channel
- PDSCH: Physical Downlink Shared Channel
- PUSCH: Physical Uplink Shared Channel
- RS: Reference Signals
- PRB: Physical Resource Block
- SCS: Sub-Carrier Spacing
- QAM: Quadrature Amplitude Modulation
- QPSK: Quadrature Phase Shift Keying
- UE: User Equipment
- UL: Uplink

## Claims

1. An apparatus (10), comprising:
means for transmitting (18) a configuration of a bandwidth part, BWP, pair for a same link direction in a same cell,
wherein the bandwidth part pair comprises a first bandwidth part (202) and a second bandwidth part (200),
wherein the first bandwidth part (202) and the second bandwidth part (200) have a same bandwidth part index,
wherein the first bandwidth part (202) is configured to have a higher priority than the second bandwidth part (200); and
means for transmitting or receiving (28) one or more signals or channels on the first bandwidth part (202) and the second bandwidth part (200),
wherein the one or more signals or channels on the first bandwidth part (202) are prioritized relative to the one or more signals or channels on the second bandwidth part (200).

2. The apparatus according to claim 1, wherein the first bandwidth part (200) and the second bandwidth part (202) each comprise information identifying a frequency location associated with the bandwidth part pair or a numerology associated with the bandwidth part pair.

3. The apparatus according to claim 1, wherein the first bandwidth part (202) and the second bandwidth part (200) comprise one or more configurations associated with one or more control channels, and wherein scheduling for the first bandwidth part (202) and the second bandwidth part (200) is based on detecting scheduling of a physical downlink control channel, PDCCH, in one or more control resource sets, CORESETs.

4. The apparatus according to claim 1, wherein one or more parameters associated with the second bandwidth part (200) override one or more parameters associated with the first bandwidth part (202) when applied on the second bandwidth part (200), wherein one or more non-overridden parameters are common to both the first bandwidth part (202) and the second bandwidth part (200).

5. The apparatus according to claim 1, wherein the first bandwidth part (202) and the second bandwidth part (200) are active at a same time but signals and channels of the second bandwidth part (200) cannot be transmitted or received at the same time with signals and channels of the first bandwidth part.

6. The apparatus according to claim 1, wherein the one or more signals or channels on the first bandwidth part (202) are prioritized relative to the one or more signals on the second bandwidth part (200) based on the first bandwidth part (202) and the second bandwidth part (200) being associated with different numerologies and based on a user equipment not being capable of concurrent multiple numerology reception or transmission.

7. The apparatus (10) according to claim 1, further comprising:
means for scheduling one or more signals or channels on the second bandwidth part (200); and
means for determining (12) to not transmit or receive a set of symbols of the one or more signals or channels based on the first bandwidth part (202) having the higher priority and at least one of the one or more signals or channels on the first bandwidth part overlapping in time with the set of symbols.

8. An apparatus (20), comprising:
means for receiving (28) a configuration of a bandwidth part, BWP, pair for a same link direction in a same cell,
wherein the bandwidth part pair comprises a first bandwidth part (202) and a second bandwidth part (200),
wherein the first bandwidth part (202) and the second bandwidth part (200) have a same bandwidth part index,
wherein the first bandwidth part (202) is configured to have a higher priority than the second bandwidth part (200); and
means for transmitting or receiving one or more signals or channels on the first bandwidth part (202) and the second bandwidth part (200),
wherein the one or more signals or channels on the first bandwidth part (202) are prioritized relative to the one or more signals or channels on the second bandwidth part (200).

9. The apparatus according to claim 8, wherein the first bandwidth part (202) and the second bandwidth part (200) each comprise information identifying a frequency location associated with the bandwidth part pair and a numerology associated with the bandwidth part pair.

10. The apparatus according to claim 8, wherein the first bandwidth part and the second bandwidth part comprise one or more configurations associated with one or more control channels, and wherein scheduling for the first bandwidth part and the second bandwidth part is based on detecting scheduling of a physical downlink control channel in one or more control resource sets.

11. The apparatus according to claim 8, wherein one or more parameters associated with the second bandwidth part override one or more parameters associated with the first bandwidth part when applied on the second bandwidth part, wherein one or more non-overridden parameters are common to both the first bandwidth part and the second bandwidth part.

12. The apparatus according to claim 8, wherein the first bandwidth part and the second bandwidth part are active at a same time but signals and channels of the second bandwidth part cannot be transmitted or received at the same time with signals and channels of the first bandwidth part.

13. The apparatus according to claim 8, wherein the one or more signals or channels on the first bandwidth part are prioritized relative to the one or more signals on the second bandwidth part based on the first bandwidth part and the second bandwidth part being associated with different numerologies and based on the user equipment not being capable of concurrent multiple numerology reception or transmission.

14. The apparatus according to claim 8, further comprising:
means for determining (22) one or more downlink control information formats according to the configuration of the first bandwidth part; and
means for monitoring (22) one or more other downlink control information formats according to the configuration of the second bandwidth part.

15. The apparatus according to claim 8, further comprising:
means for determining (22) that the one or more signals or channels for different bandwidth parts are scheduled to collide; and
means for determining (22) to drop one or more of the one or more signals or channels associated with the second bandwidth part.

## Patentansprüche

1. Vorrichtung (10), die Folgendes umfasst:
Mittel zum Übertragen (18) einer Auslegung eines Bandbreitenteil(BWP)-Paares für eine selbe Verbindungsrichtung in einer selben Zelle,
wobei das Bandbreitenteilpaar einen ersten Bandbreitenteil (202) und einen zweiten Bandbreitenteil (200) umfasst,
wobei der erste Bandbreitenteil (202) und der zweite Bandbreitenteil (200) einen selben Bandbreitenteilindex aufweisen,
wobei der erste Bandbreitenteil (202) dazu ausgelegt ist, eine höhere Priorität aufzuweisen als der zweite Bandbreitenteil (200); und
Mittel zum Übertragen oder Empfangen (28) von einem oder mehreren Signalen oder Kanälen im ersten Bandbreitenteil (202) und im zweiten Bandbreitenteil (200),
wobei das eine oder die mehreren Signalen oder Kanäle im ersten Bandbreitenteil (202) relativ zu dem einen oder den mehreren Signalen oder Kanälen im zweiten Bandbreitenteil (200) priorisiert sind.

2. Vorrichtung nach Anspruch 1, wobei der erste Bandbreitenteil (200) und der zweite Bandbreitenteil (202) jeweils Informationen umfassen, die eine Frequenzlage, die mit dem Bandbreitenteilpaar verknüpft ist, oder eine Numerologie, die mit dem Bandbreitenteilpaar verknüpft ist, identifizieren.

3. Vorrichtung nach Anspruch 1, wobei der erste Bandbreitenteil (202) und der zweite Bandbreitenteil (200) eine oder mehrere Auslegungen umfassen, die mit einem oder mehreren Steuerkanälen verknüpft sind, und wobei das Planen für den ersten Bandbreitenteil (202) und den zweiten Bandbreitenteil (200) auf dem Detektieren eines Planens eines physischen Downlinksteuerkanals, PDCCH, in einem oder mehreren Steuerressourcensätzen, CORESETs, basiert.

4. Vorrichtung nach Anspruch 1, wobei ein oder mehrere Parameter, die mit dem zweiten Bandbreitenteil (200) verknüpft sind, einen oder mehrere Parameter aufheben, die mit dem ersten Bandbreitenteil (202) verknüpft sind, wenn sie auf den zweiten Bandbreitenteil (200) angewandt werden, wobei ein oder mehrere nicht aufgehobene Parameter sowohl für den ersten Bandbreitenteil (202) als auch für den zweiten Bandbreitenteil (200) gelten.

5. Vorrichtung nach Anspruch 1, wobei der erste Bandbreitenteil (202) und der zweite Bandbreitenteil (200) zu einer selben Zeit aktiv sind, aber Signale und Kanäle des zweiten Bandbreitenteils (200) nicht gleichzeitig mit Signalen und Kanälen des ersten Bandbreitenteils übertragen oder empfangen werden können.

6. Vorrichtung nach Anspruch 1, wobei, darauf basierend, dass der erste Bandbreitenteil (202) und der zweite Bandbreitenteil (200) mit verschiedenen Numerologien verknüpft sind, und darauf basierend, dass eine Teilnehmereinrichtung zu mehreren gleichzeitigen Numerologieempfang oder -übertragung nicht in der Lage ist, das eine oder die mehreren Signale oder Kanäle im ersten Bandbreitenteil (202) relativ zu dem einen oder den mehreren Signalen im zweiten Bandbreitenteil (200) priorisiert sind.

7. Vorrichtung (10) nach Anspruch 1, die ferner Folgendes umfasst:
Mittel zum Planen von einem oder mehreren Signalen oder Kanälen im zweiten Bandbreitenteil (200); und
darauf basierend, dass der erste Bandbreitenteil (202) eine höhere Priorität aufweist und mindestens eines des einen oder der mehreren Signale oder Kanäle des ersten Bandbreitenteils den Satz von Symbolen in der Zeit überlappt, Mittel zum Bestimmen (12), einen Satz von Symbolen des einen oder der mehreren Signale oder Kanäle nicht zu übertragen oder zu empfangen.

8. Vorrichtung (20), die Folgendes umfasst:
Mittel zum Empfangen (28) einer Auslegung eines Bandbreitenteil(BWP)-Paares für eine selbe Verbindungsrichtung in einer selben Zelle,
wobei das Bandbreitenteilpaar einen ersten Bandbreitenteil (202) und einen zweiten Bandbreitenteil (200) umfasst,
wobei der erste Bandbreitenteil (202) und der zweite Bandbreitenteil (200) einen selben Bandbreitenteilindex aufweisen,
wobei der erste Bandbreitenteil (202) dazu ausgelegt ist, eine höhere Priorität aufzuweisen als der zweite Bandbreitenteil (200); und
Mittel zum Übertragen oder Empfangen von einem oder mehreren Signalen oder Kanälen im ersten Bandbreitenteil (202) und im zweiten Bandbreitenteil (200),
wobei das eine oder die mehreren Signalen oder Kanäle im ersten Bandbreitenteil (202) relativ zu dem einen oder den mehreren Signalen oder Kanälen im zweiten Bandbreitenteil (200) priorisiert sind.

9. Vorrichtung nach Anspruch 8, wobei der erste Bandbreitenteil (202) und der zweite Bandbreitenteil (200) jeweils Informationen umfassen, die eine Frequenzlage, die mit dem Bandbreitenteilpaar verknüpft ist, und eine Numerologie, die mit dem Bandbreitenteilpaar verknüpft ist, identifizieren.

10. Vorrichtung nach Anspruch 8, wobei der erste Bandbreitenteil und der zweite Bandbreitenteil eine oder mehrere Auslegungen umfassen, die mit einem oder mehreren Steuerkanälen verknüpft sind, und wobei das Planen für den ersten Bandbreitenteil und den zweiten Bandbreitenteil auf dem Detektieren eines Planens eines physischen Downlinksteuerkanals in einem oder mehreren Steuerressourcensätzen basiert.

11. Vorrichtung nach Anspruch 8, wobei ein oder mehrere Parameter, die mit dem zweiten Bandbreitenteil verknüpft sind, einen oder mehrere Parameter aufheben, die mit dem ersten Bandbreitenteil verknüpft sind, wenn sie auf den zweiten Bandbreitenteil angewandt werden, wobei ein oder mehrere nicht aufgehobene Parameter sowohl für den ersten Bandbreitenteil als auch für den zweiten Bandbreitenteil gelten.

12. Vorrichtung nach Anspruch 8, wobei der erste Bandbreitenteil und der zweite Bandbreitenteil zu einer selben Zeit aktiv sind, aber Signale und Kanäle des zweiten Bandbreitenteils nicht gleichzeitig mit Signalen und Kanälen des ersten Bandbreitenteils übertragen oder empfangen werden können.

13. Vorrichtung nach Anspruch 8, wobei, darauf basierend, dass der erste Bandbreitenteil und der zweite Bandbreitenteil mit verschiedenen Numerologien verknüpft sind, und darauf basierend, dass eine Teilnehmereinrichtung zu mehreren gleichzeitigen Numerologieempfang oder -übertragung nicht in der Lage ist, das eine oder die mehreren Signale oder Kanäle im ersten Bandbreitenteil relativ zu dem einen oder den mehreren Signalen im zweiten Bandbreitenteil priorisiert sind.

14. Vorrichtung nach Anspruch 8, die ferner Folgendes umfasst:
Mittel zum Bestimmen (22) von einem oder mehreren Downlinksteuerinformationsformaten gemäß der Auslegung des ersten Bandbreitenteils; und
Mittel zum Überwachen (22) von einem oder mehreren anderen Downlinksteuerinformationsformaten gemäß der Auslegung des zweiten Bandbreitenteils.

15. Vorrichtung nach Anspruch 8, die ferner Folgendes umfasst:
Mittel zum Bestimmen (22), dass das eine oder die mehreren Signalen oder Kanäle für verschiedene Bandbreitenteile zum Kollidieren geplant sind; und
Mittel zum Bestimmen (22), ein oder mehrere des einen oder der mehreren Signale oder Kanäle, die mit dem zweiten Bandbreitenteil verknüpft sind, zu entfernen.

## Revendications

1. Appareil (10), comprenant :
des moyens pour transmettre (18) une configuration d'une paire de parties de bande passante, BWP, pour une même direction de liaison dans une même cellule,
dans lequel la paire de parties de bande passante comprend une première partie de bande passante (202) et une deuxième partie de bande passante (200),
dans lequel la première partie de bande passante (202) et la deuxième partie de bande passante (200) ont un même indice de partie de bande passante,
dans lequel la première partie de bande passante (202) est configurée pour avoir une priorité plus élevée que la deuxième partie de bande passante (200) ; et
des moyens pour transmettre ou recevoir (28) un ou plusieurs signaux ou canaux sur la première partie de bande passante (202) et la deuxième partie de bande passante (200),
dans lequel les un ou plusieurs signaux ou canaux sur la première partie de bande passante (202) sont prioritaires par rapport aux un ou plusieurs signaux ou canaux sur la deuxième partie de bande passante (200).

2. Appareil selon la revendication 1, dans lequel la première partie de bande passante (200) et la deuxième partie de bande passante (202) comprennent chacune des informations identifiant un emplacement de fréquence associé à la paire de parties de bande passante ou une valeur numérique associée à la paire de parties de bande passante.

3. Appareil selon la revendication 1, dans lequel la première partie de bande passante (202) et la deuxième partie de bande passante (200) comprennent une ou plusieurs configurations associées à un ou plusieurs canaux de contrôle, et dans lequel la planification pour la première partie de bande passante (202) et la deuxième partie de bande passante (200) est basée sur la détection de la planification d'un canal physique de contrôle de liaison descendante, PDCCH, dans un ou plusieurs ensembles de ressources de contrôle, CORESET.

4. Appareil selon la revendication 1, dans lequel un ou plusieurs paramètres associés à la deuxième partie de bande passante (200) surpassent un ou plusieurs paramètres associés à la première partie de bande passante (202) lorsqu'ils sont appliqués à la deuxième partie de bande passante (200), dans lequel un ou plusieurs paramètres non surpassés sont communs à la fois à la première partie de bande passante (202) et à la deuxième partie de bande passante (200).

5. Appareil selon la revendication 1, dans lequel la première partie de bande passante (202) et la deuxième partie de bande passante (200) sont actives en même temps, mais les signaux et les canaux de la deuxième partie de bande passante (200) ne peuvent pas être transmis ou reçus en même temps que les signaux et les canaux de la première partie de bande passante.

6. Appareil selon la revendication 1, dans lequel les un ou plusieurs signaux ou canaux sur la première partie de bande passante (202) sont priorisés par rapport aux un ou plusieurs signaux sur la deuxième partie de bande passante (200) sur la base du fait que la première partie de bande passante (202) et la deuxième partie de bande passante (200) sont associées à des valeurs numériques différentes, et sur la base du fait qu'un équipement utilisateur n'est pas en mesure de recevoir ou de transmettre simultanément de multiples valeurs numériques.

7. Appareil (10) selon la revendication 1, comprenant en outre :
des moyens pour planifier un ou plusieurs signaux ou canaux sur la deuxième partie de bande passante (200) ; et
des moyens pour déterminer (12) de ne pas transmettre ou recevoir un ensemble de symboles des un ou plusieurs signaux ou canaux sur la base du fait que la première partie de bande passante (202) a une priorité plus élevée et qu'au moins un des un ou plusieurs signaux ou canaux sur la première partie de bande passante se chevauche dans le temps avec l'ensemble de symboles.

8. Appareil (20), comprenant :
des moyens pour recevoir (28) une configuration d'une paire de parties de bande passante, BWP, pour une même direction de liaison dans une même cellule,
dans lequel la paire de parties de bande passante comprend une première partie de bande passante (202) et une deuxième partie de bande passante (200),
dans lequel la première partie de bande passante (202) et la deuxième partie de bande passante (200) ont un même indice de partie de bande passante,
dans lequel la première partie de bande passante (202) est configurée pour avoir une priorité plus élevée que la deuxième partie de bande passante (200) ; et
des moyens pour transmettre ou recevoir un ou plusieurs signaux ou canaux sur la première partie de bande passante (202) et la deuxième partie de bande passante (200),
dans lequel les un ou plusieurs signaux ou canaux sur la première partie de bande passante (202) sont prioritaires par rapport aux un ou plusieurs signaux ou canaux sur la deuxième partie de bande passante (200).

9. Appareil selon la revendication 8, dans lequel la première partie de bande passante (202) et la deuxième partie de bande passante (200) comprennent chacune des informations identifiant un emplacement de fréquence associé à la paire de parties de bande passante et une valeur numérique associée à la paire de parties de bande passante.

10. Appareil selon la revendication 8, dans lequel la première partie de bande passante et la deuxième partie de bande passante comprennent une ou plusieurs configurations associées à un ou plusieurs canaux de contrôle, et dans lequel la planification pour la première partie de bande passante et la deuxième bande passante est basée sur la détection de la planification d'un canal physique de contrôle de liaison descendante dans un ou plusieurs ensembles de ressources de contrôle.

11. Appareil selon la revendication 8, dans lequel un ou plusieurs paramètres associés à la deuxième partie de bande passante surpassent un ou plusieurs paramètres associés à la première partie de bande passante lorsqu'ils sont appliqués à la deuxième partie de bande passante, dans lequel un ou plusieurs paramètres non surpassés sont communs à la fois à la première partie de bande passante et à la deuxième partie de bande passante.

12. Appareil selon la revendication 8, dans lequel la première partie de bande passante et la deuxième partie de bande passante sont actives en même temps, mais les signaux et les canaux de la deuxième partie de bande passante ne peuvent pas être transmis ou reçus en même temps que les signaux et les canaux de la première partie de bande passante.

13. Appareil selon la revendication 8, dans lequel les un ou plusieurs signaux ou canaux sur la première partie de bande passante sont priorisés par rapport aux un ou plusieurs signaux sur la deuxième partie de bande passante sur la base du fait que la première partie de bande passante et la deuxième partie de bande passante sont associées à des valeurs numériques différentes, et sur la base du fait que l'équipement utilisateur n'est pas en mesure de recevoir ou de transmettre simultanément de multiples valeurs numériques.

14. Appareil selon la revendication 8, comprenant en outre :
des moyens pour déterminer (22) un ou plusieurs formats d'informations de contrôle de liaison descendante selon la configuration de la première partie de bande passante ; et
des moyens pour surveiller (22) un ou plusieurs autres formats d'informations de contrôle de liaison descendante selon la configuration de la deuxième partie de bande passante.

15. Appareil selon la revendication 8, comprenant en outre :
des moyens pour déterminer (22) que les un ou plusieurs signaux ou canaux pour différentes parties de bandes passantes sont planifiés pour entrer en collision ; et
des moyens pour déterminer (22) de laisser tomber un ou plusieurs des un ou plusieurs signaux ou canaux associés à la deuxième partie de bande passante.
